# EUROPÄISCHE PATENTSCHRIFT

(11) **EP 1 816 057 B1**
(45) Veröffentlichungstag und Bekanntmachung des Hinweises auf die Patenterteilung: **19.03.2014**
(21) Anmeldenummer: 06025165.9
(22) Anmeldetag: 06.12.2006
(51) Int. Cl.: B62D 33/02

(54) **Rungensystem für Nutzfahrzeugaufbauten**
Post system for commercial vehicle superstructures
Système de montants pour véhicules utilitaires

(30) Priorität: 01.02.2006 DE 102006004994
(43) Veröffentlichungstag der Anmeldung: 08.08.2007
(73) Patentinhaber: F. HESTERBERG & SÖHNE GmbH & Co. KG, 58256 Ennepetal (DE)
(72) Erfinder: Tiedtke, Henning, 58256 Ennepetal (DE); Klein, Claus-Jürgen, 58332 Schwelm (DE)
(74) Vertreter: Christophersen, Ulrich Rudolf

(56) Entgegenhaltungen:
- WO-A-00/34075
- DE-A1- 10 043 296
- DE-A1- 19 544 305
- DE-C1- 4 321 516
- DE-U1- 20 301 201
- DE-U1-202004 014 744

## Beschreibung

Die Erfindung betrifft ein Rungensystem für Nutzfahrzeugaufbauten, beinhaltend einen, mit vorgebbarem Querschnitt ausgebildeten länglichen Grundkörper, seitlich des Grundkörpers positionierbare Planlattentaschen sowie einen im Bereich eines Endes des Grundkörpers innerhalb desselben gegebenenfalls teleskopierbar vorgesehenen, mit einem Laufwagen zusammenwirkenden Einschubelement.

Derartige Rungensysteme sind beispielsweise in der DE-U 298 16 833 sowie der DE-C 198 42 844 beschrieben.

Diese Rungensysteme werden bezüglich ihres Aufbaus bis dato nach Angaben der Ausrüster von Nutzfahrzeugen, insbesondere im Hinblick auf die jeweiligen Einsatzhöhen der auszurichtenden Nutzfahrzeuge vorgegeben und seitens der Hersteller von Rungensystemen individuell gefertigt und ausgeliefert.

So wird beispielsweise ein Rungengrundkörper mit seitlichen Planlattentaschen vernietet, die einen bestimmten Abstand einstweilig zueinander und andererseits zum Boden/Dach des auszurüstenden Nutzfahrzeuges aufweisen. Gleiches gilt für mit dem Rungenkörper in Wirkverbindung bringbare stationär mit dem einen Ende des Rungengrundkörpers verbundene Einschubelemente, die in ihrem freien Endbereich einen dachseitig vorgesehenen Laufwagen aufweisen.

Bei teleskopierbaren Einschubelementen wurden bis dato definierte Ausfahrwege vorgegeben, so dass das Nutzfahrzeug mit erhöhtem Dachstand bewegt werden kann.

In heutiger Zeit ist auf Seiten der Nutzfahrzeugausrüster der Wunsch gegeben, flexibler auf unterschiedliche Bauhöhen des Nutzfahrzeugaufbaus reagieren zu müssen, was durch individuell vorgefertigte Rungensysteme allein aus wirtschaftlichen Gründen nur schwer herbeigeführt werden kann.

Durch das DE-Gbm 20 2004 014 744 ist eine Vorrichtung zum Anheben und Absenken eines über Rungen abgestützten Daches eines Nutzfahrzeugaufbaus bekannt geworden, mit einer im oberen Rungenbereich angeordneten Führung, in der ein Hubglied mit Dachanbindung auf- und abbeweglich geführt ist, einer sich an die Führung anschließenden Verlängerung, einem Dämpfungselement, das zwischen der Führung und der Verlängerung vorgesehen ist sowie einer im unteren Bereich der Verlängerung angeordneten Arretiereinrichtung, die mittel- oder unmittelbar mit dem Hubglied zusammenwirkt, wobei die Verlängerung und zumindest ein Teilbereich der Arretiereinrichtung als ineinander liegende bzw. ineinander legbare Profile ausgebildet sind und eines der Profile über Arretierungslöcher verfügt, in welche mit dem anderen Profil zusammenwirkende Rastmittel eingreifen.

Eine Variante besteht darin, dass eine im Bereich der Verlängerung geführte separate Arretiereinrichtung an ihrer Innenseite mit asymmetrisch angeordneten Ansätzen versehen ist. Durch diese Maßnahme kann bereits eine gewisse Abstufung bei der Fixierung des Hubgliedes in vorgebbaren Stellungen realisiert werden. Nachteilig ist hier jedoch zu sehen, dass diese Arretiereinrichtung entfernbar ist und somit möglicher Weise verloren gehen kann.

Dem DE-Gbm 203 03 885 ist eine Runge für einen Planenaufbau zu entnehmen, umfassend ein oberes Rungenteil und ein mit dem oberen Rungenteil in einem Überlappungsbereich zusammengreifendes unteres Rungenteil, wobei das obere Rungenteil an einem oberen Längsträger des Planenaufbaus und das untere Rungenteil an einem Gegenlager im Bereich einer Ladepritsche des Planenaufbaus festlegbar ist, wobei wenigstens ein erstes der unteren und oberen Rungenteile eine Faltung aufweist, die in wenigstens zwei im Wesentlichen parallelen Ebenen verläuft, welche quer zu einer nach außen gerichteten Ladungskraft angeordnet sind. Das erste Rungenteil ist mit einer im Bereich der ersten der beiden parallelen Ebenen angeordneten Basis einerseits der Ladungskraft zugekehrt. Im Bereich des weiter von der Mittellinie entfernten Endes des Überlappungsbereiches ist wenigstens ein Widerlager angeordnet, an dem das erste Rungenteil außerhalb der Basis abgestützt ist. Das obere Rungenteil weist eine Lochung auf, in die ein Riegelbolzen des unteren Rungenteiles eingreift und damit die Höhe der Runge festlegt. In dem jeweiligen Lochbild entsprechenden Abstufungen können somit entsprechend der gewählten Lochabstände unterschiedliche Höhen herbeigeführt werden. Feinere Abstufungen sind hierbei jedoch nicht möglich.

Aus der DE 100 43 296 A1 und der DE 43 21 516 C1 ist jeweils ein Rungensystem für Nutzfahrzeugaufbauten bekannt, bei dem in einem Grundkörper der Runge ein ein- oder zweiteiliges Einschubelement telekopierbar angeordnet ist. Die Längsposition dieses Einschubelements am Grundkörper der Runge lässt sich in bestimmten Schritten festlegen, um so eine für den jeweiligen Fahrzeugaufbau spezifische Gesamtlänge der Runge zu erzielen. Die so erreichte Anpassungsfähigkeit erfasst jedoch nicht andere Bauteile der Runge und insbesondere nicht die seitlich des Rungengrundkörpers angeordneten Planlattentaschen. Diese weisen vielmehr einen nicht veränderbaren Abstand zueinander und zum Boden bzw. Dach des auszurüstenden Nutzfahrzeuges auf.

Der Erfindung liegt die Aufgabe zugrunde, ein Rungensystem bereitzustellen, mit welchem flexibler auf Kundenwünsche reagiert werden kann. Das Rungensystem soll hierbei in wirtschaftlicher Weise herstellbar und im Wesentlichen flexibel auf jeden Kundenwunsch anpassbar sein.

Diese Aufgabe wird gelöst durch ein Rungensystem für Nutzfahrzeugaufbauten, beinhaltend einen mit vorgebbarem Querschnitt ausgebildeten länglichen Grundkörper, seitlich des Grundkörpers positionierbare Planlattentaschen sowie einen im Bereich eines Endes des Grundkörpers innerhalb desselben, gegebenenfalls teleskopierbar, vorgesehenen, mit einem Laufwagen zusammenwirkenden Einschubelement, wobei der Grundkörper die Planlattentaschen sowie das Einschubelement mit definierten Lochbildern versehen sind, und wobei die einzelnen Bauteile nach Art eines Baukastensystems im Bereich ihrer jeweiligen Lochbilder dergestalt zueinander positionierbar sind, dass sie zur Herbeiführung unterschiedlicher Stellungen am Nutzfahrzeugaufbau mit vorgebbaren Höhenschritten mittel- oder unmittelbar zueinander festlegbar sind.

Vorteilhafte Weiterbildungen des Erfindungsgegenstandes sind den Unteransprüchen zu entnehmen.

Mit dem Erfindungsgegenstand ist es nun möglich, auf unkomplizierte Weise im Wesentlichen allen Kundenwünschen bezüglich der Höhenpositionierung der einzelnen Bauteile nachzukommen. Zu diesem Zweck werden die genannten Bauteile mit bezüglich ihres Lochrasters unterschiedlichen Lochbildern versehen, so dass in einfacher Weise in kleinen Höhenschritten (Feinabstimmung) unterschiedlichste Höhen bezüglich der Positionierung der einzelnen Bauteile zueinander realisiert werden können.

Dem Ausrüster von Nutfahrzeugen werden somit Einzelbauteile vorgebbarer Höhe und Gestalt zur Verfügung gestellt, die er dann selber vor Ort auf sein jeweils gewünschtes Anbaumaß zusammenstellen kann, um seinem jeweiligen Anwendungsfall gerecht zu werden.

Der Rungengrundkörper ist einem weiterem Gedanken der Erfindung gemäß im Querschnitt insbesondere C-förmig ausgebildet, wobei die seitlichen Schenkel des C-Profils zur Positionierung der Planlattentaschen, über eine gewisse Höhe des Rungengrundkörpers gesehen, mit einem gleichmäßig ausgebildeten Lochbild versehen ist. Die einzelnen Löcher haben einen gleichmäßigen Abstand zueinander. Das Lochbild der Planlattentaschen ist hierbei dergestalt vom Lochbild des Grundkörpers abweichend vorgesehen, dass die in den Planlattentaschen vorgesehenen Löcher einen andersartigen, insbesondere kleineren, Lochabstand zueinander aufweisen. Durch diese Maßnahme kann gewährleistet werden, dass die jeweilige Planlattentasche in geringen Höhenschritten (Feinabstimmung) relativ zum seitlichen Schenkel des im Querschnitt C-förmig ausgebildeten Grundkörpers mit selbigem, beispielsweise durch Nieten, verbunden werden kann.

Soll ein nicht teleskopierbares Einschubelement mit einem Rungengrundkörper in Wirkverbindung gebracht werden, wird selbiges mit einem der Querschnittsform des Rungengrundkörpers angepassten Profil ausgebildet. Bei Verwendung eines C-Profiles für den Rungengrundkörper kann ein entsprechendes C-Profil auch für das Einschubelement vorgesehen werden. Im Bereich der seitlichen Schenkel wird ein Lochbild mit vorgebbarem Lochabstand eingebracht. Um nun auch hier eine Variabilität bezüglich unterschiedlichster Höhenschritte (Feinabstimmung) realisieren zu können, wird im Bereich des freien Endes des Rungenkörpers mindestens ein Lochbild am zugehörigen seitlichen Schenkel erzeugt, das einen geringeren Lochabstand als derjenige des Einschubelementes aufweist. Aus Sicherheitsgründen werden vorteilhafter Weise mehrere gleichartig ausgebildete Lochbilder an den seitlichen Schenkeln des Rungengrundkörpers vorgesehen, so dass das Einschubelement an mindestens zwei Stellen eines jeden Schenkels gegenüber dem freien Ende des Rungengrundkörpers positionierbar und dort festlegbar ist. Dies kann beispielsweise auch durch Nieten geschehen.

Soll bei einem Rungensystem ein mit einem Laufwagen zusammenwirkendes Einschubelement in teleskopierbarer Weise mit einem Grundkörper in Wirkverbindung gebracht werden, müssen andersartige Mittel geschaffen werden, um den teleskopierbaren Teil in vorgebbaren Positionen relativ zum Rungengrundkörper zu positionieren, beispielsweise über Hilfsmittel. Um dies realisieren zu können, wird die in Längsrichtung parallel zum Rungengrundkörper verlaufende Stirnfläche des Einschubelementes mit mindestens zwei gleichartig, jedoch mit Abstand zueinander, vorgesehenen Lochbildern versehen, wobei ein jedes Lochbild einen definierten Lochabstand aufweist. Zur Einstellung eines definierten Ausfahrweges des teleskopierbaren Einschubelementes kommen Anschlagelemente in Form von quadratischen und rechteckigen Platten zum Einsatz, die mit einem definierten Lochbild versehen sind und im Bereich des jeweiligen Lochbildes der Stirnfläche des Einschubelementes positioniert werden. Der Abstand der einzelnen Anschlagelemente definiert den Ausfahrweg des Einschubelementes. Soll nun auf Seitens des Anwenders ein Ausfahrweg realisiert werden, der in Anteilen vom üblichen Lochbild abweicht, kann durch Verdrehen des jeweiligen Anschlagelementes relativ zur Stirnfläche des Einschubelementes ein andersartiger Ausfahrweg (Feinabstimmung) realisiert werden. Im freien Endbereich des Rungengrundkörpers wird darüber hinaus ein weiteres Hilfsmittel in Form eines Segmentes vorgebbarer Kontur eingebracht, das einen Anschlag für das jeweilige Anschlagelement bildet.

Dieser Anschlag kann beispielsweise durch zwei miteinander in Wirkverbindung stehende plattenartig ausgebildete Bauteile gebildet werden, wobei das der Stirnfläche des Einschubelementes abgewandte Bauteil nach Art eines Puzzlestückes seitliche Profile aufweist, die in entsprechende Aussparungen im Rungengrundkörper einknüpfbar sind. Nach Montage der einzelnen Bauteile ist dieses Puzzlestück unverlierbar im Rungengrundkörper positioniert und bildet eine obere sowie eine untere Anschlagfläche für das jeweilige Anschlagelement

Ein weiterer, stets wiederkehrender Betriebszustand ist das Bewegen des Nutzfahrzeuges mit angehobenem Dach. Um hier eine Stabilität bezüglich der Höhe des teleskopierbaren Einschubelementes gewährleisten zu können, kommt, einem weiterem Gedanken der Erfindung gemäß, ein Steckkörper zum Einsatz. Der Rungengrundkörper ist in Teilbereichen seiner Längserstreckung mit einem andersartigen Lochbild versehen, wobei jedoch auch hier ein gleichmäßiger Lochabstand gegeben ist. Der jeweilige zum Einsatz gelangende Steckkörper wird gebildet durch mindestens zwei Elemente, nämlich ein dem jeweiligen Querschnitt des Rungengrundkörpers angepasstes Steckprofil sowie ein damit in Wirkverbindung stehendes Deckprofil, beispielsweise eine Platte. Das Steckprofil ist mit krallenartigen Ansätzen versehen, die dem Lochbild des Rungengrundkörpers entsprechen, so dass der Steckköper manuell an verschiedenen Positionen des Lochbildes des Rungengrundkörpers positioniert werden kann. Durch diese Maßnahme kann ein bestimmter Höhenschrittrealisiert werden. Wünscht der AusrüsterBetreiber des Nutzfahrzeuges darüber hinaus eine feinere Einstellung, beispielsweise in vorgebbaren Anteilen des gegebenen Lochabstandes, so kann dies dadurch realisiert werden, dass die Lochbilder des Steckprofiles sowie des Deckprofiles voneinander abweichend vorgesehen werden. Das Deckprofil kann hierbei mit einem Lochbild mit feiner gestuften Lochabstand ausgeführt werden, so dass bei vom Standard abweichenden Höhenschritten das Deckprofil in einer andersartigen Position zum Steckprofil angeordnet und mit selbigem verbunden wird.

Zur manuellen Verstellung des Steckkörpers ist im Deckprofil in vorteilhafter Weise eine Ausnehmung vorgesehen, über welche der Steckkörper manuell relativ zum Rungengrundkörper in eine andersartige Position gebracht werden kann. Durch die Anpassung an die Rungenlänge (Feinabstimmung) werden Steck- und Deckprofil miteinander vernietet und sind somit unverlierbar im Rungenbereich positioniert. Somit kann in feinen Schritten eine Hubdacheinstellung realisiert werden.

Gleiches gilt auch für andersartige Bauteile, wie beispielsweise die Anschlagelemente.

Der Erfindungsgegenstand ist anhand eines Ausführungsbeispieles in der Zeichnung dargestellt und wird wie folgt beschrieben. Es zeigen:
- Figur 1: Prinzipieller beispielhafter Aufbau des erfindungsgemäßen Rungensystems
- Figur 2: Darstellung unterschiedlich angeordneter und dimensionierter Planlattentaschen relativ zum Rungengrundkörper
- Figur 3: Anordnung eines mit einem Laufwagen verbundenen Einschubelementes relativ zum Rungengrundkörper
- Figur 4 Figur 5 Figur 6: Explosions- und Zusammenstellungszeichnung eines relativ zum Rungengrundkörper teleskopierbaren Einschubelementes
Prinzipskizze eines aus mehreren Bauteilen zusammengesetzten Steckkörpers
Positionierung des Steckkörpers gemäß Figur 5 im Bereich des Rungengrundkörpers.

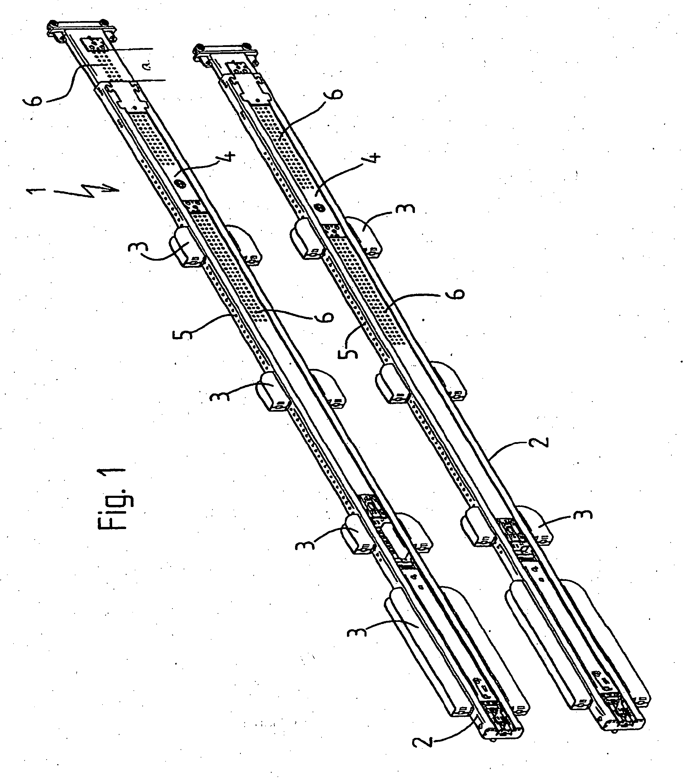

Figur 1 zeigt als Prinzipskizze ein Rungensystem 1, beinhaltend einen Rungengrundkörper 2 vorgebbarer Länge, der in diesem Beispiel durch ein C-Profil gebildet ist. Am Rungengrundkörper 2 können unterschiedlich dimensionierte Planlattentaschen 3 in unterschiedlichen Höhen zueinander positioniert und festgelegt werden. Innerhalb des C-Profiles des Rungengrundkörpers 2 ist ein Einschubelement 4 teleskopierbar vorgesehen, das in diesem Beispiel um einen Weg a relativ zum Rungengrundkörper 2 ausgefahren werden soll. Das untere Bild zeigt die eingefahrene Position des Einschubelementes 4, während das obere Bild die ausgefahrene Position wiedergibt. Ohne an dieser Stelle näher darauf einzugehen ist erkennbar, dass der Rungengrundkörper 2 und das Einschubelement 4 mit Lochbildern 5,6 versehen sind. Deren Funktion wird in den folgenden Figuren näher beschrieben.

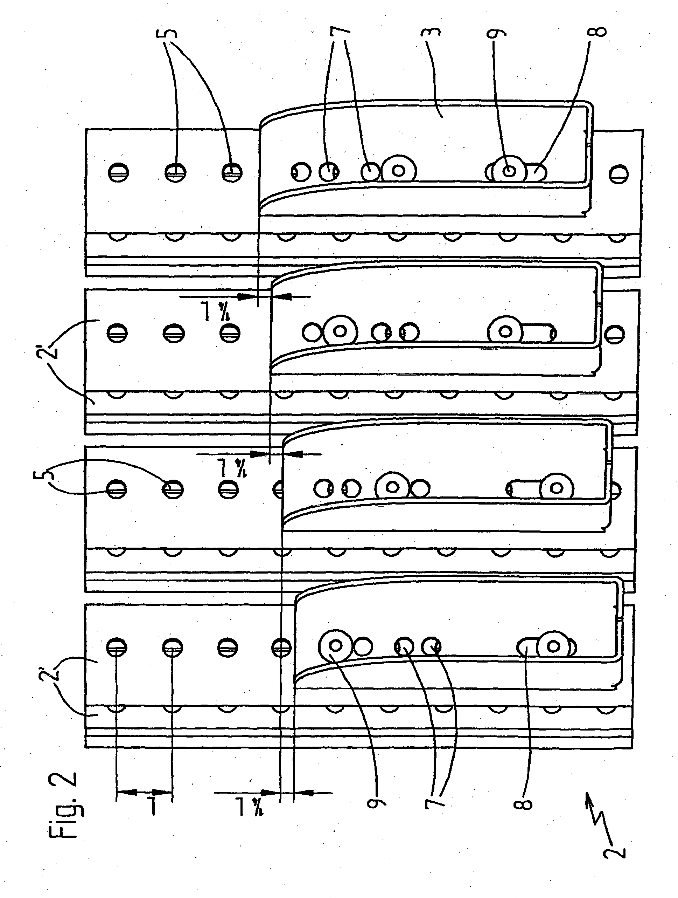

Figur 2 zeigt einen Teilbereich des Rungengrundkörpers 2. Die seitlichen Schenkel 2' sind mit besagtem Lochbild 5 versehen, wobei die einzelnen Lochabstände in diesem Beispiel den Wert L betragen sollen. Die Planlattentaschen 3 weisen ein dazu abweichendes Lochbild 7 auf. Der Lochabstand des Lochbildes 7 ist geringer, z. B. 1/4 L, als der Lochabstand des Lochbildes 5. Darüber hinaus ist außerhalb des Lochbildes 7 noch ein Langloch 8 vorgesehen. Die einzelnen Darstellungen dokumentieren wie die Planlattentasche 3 in diesem Beispiel in Höhenschritten von jeweils 1/4 L relativ zum Rungengrundkörper 2 positioniert und gegenüber dem Rungengrundkörper 2 festgelegt werden kann. Dies kann beispielsweise durch Niete 9 geschehen, sofern für den jeweiligen Anwendungsfall eine dauerhafte Positionierung der jeweiligen Planlattentaschen 3 relativ zum Rungengrundkörper 2 gegeben ist. Soll eine gewisse Variabilität vorgehalten werden, wird auf eine lösbare Verbindung zwischen Planlattentasche 3 und Rungengrundkörper 2 zurückgegriffen.

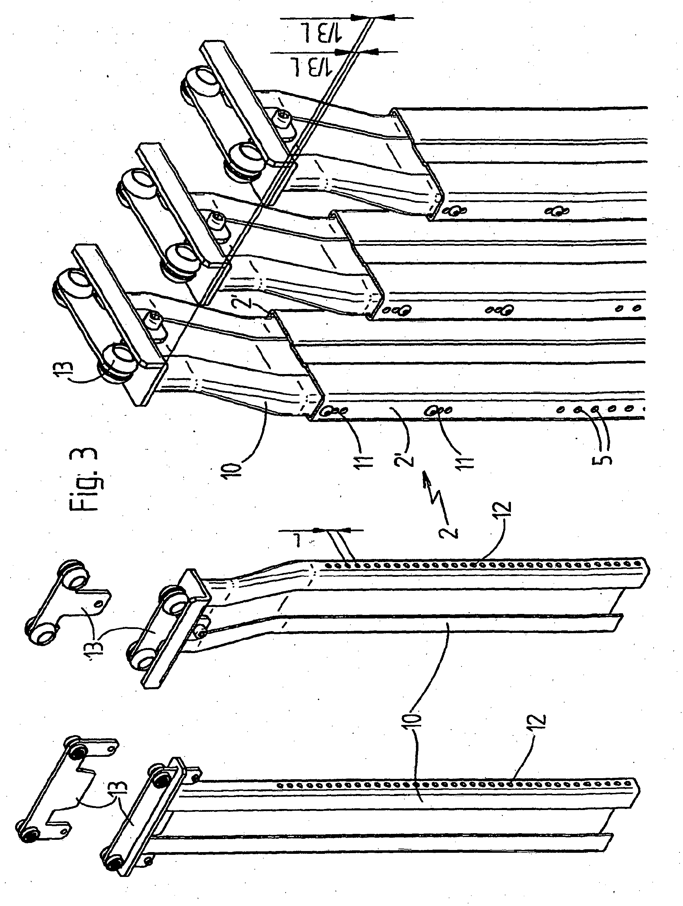

Figur 3 zeigt die Verlagerung eines stationären Einschubelementes 10 relativ zum Rungengrundkörper 2. Erkennbar ist ein Teil des Lochbildes 5 zur Aufnahme der nicht weiter dargestellten Planlattentaschen. Im Bereich des freien Endes des Rungengrundkörpers 2 ist an den jeweiligen Schenkeln 2' mindestens ein weiteres Lochbild 11 vorgesehen. Das mit unterschiedlichen Formen ausgebildete Einschubelement 10 weist ebenfalls ein Lochbild 12 auf, das einen definierten Lochabstand L aufweist. Das jeweilige Einschubelement 10 wirkt mit einem Laufwagen 13 zusammen. Der Lochabstand des jeweiligen Lochbildes 11 beträgt einen Bruchteil von L, z. B. 1/3 L des Lochbildes 12, so dass eine entsprechend fein abgestufte Lage des Einschubelementes 10 relativ zum Rungengrundkörper 2 herbeigeführt werden kann.

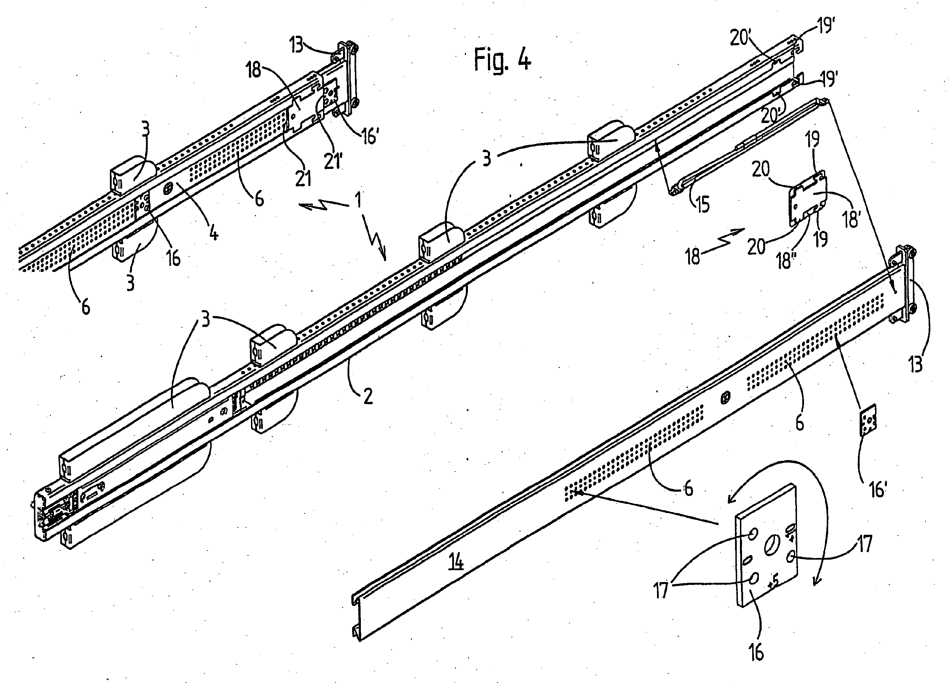

Figur 4 zeigt das bereits in Figur 1 angesprochene Rungensystem 1, einmal als Explosionszeichnung und einmal in fertig montiertem Zustand. Erkennbar sind folgende Bauteile: der Rungengrundkörper 2, die Planlattentaschen 3 sowie das Einschubelement 4 das mit zwei gleichartigen Lochbildern 6 versehen ist. Auch dieses teleskopierbare Einschubelement 4 wirkt im Bereich seines freien Endes mit einem Laufwagen 13 zusammen. Das jeweilige Lochbild 6 ist abweichend von den bisher dargestellten Lochbildern 5,7,10,11 auf der freien Stirnfläche 14 des Einschubelementes 4 vorgesehen. Mit dem Bezugszeichen 15 ist ein Sicherungselement angesprochen, das einerseits am Rungengrundkörper 2 und andererseits im laufwagenseitigen Bereich des Einschubelementes 4 befestigt wird.

Zur Einstellung eines vorgebbaren Hubes des Einschubelementes 4 (siehe Figur 1) relativ zum Rungengrundkörper 2 kommen plattenartig ausgebildete Anschlagelemente 16,16' zum Einsatz, die an vorgebbaren Stellen des jeweiligen Lochbildes 6 positioniert und festgelegt werden. Ein jedes Anschlagelement 16,16' ist mit einem definierten Lochbild 17 versehen. Durch Drehen des jeweiligen Anschlagelementes 16,16' relativ zum Lochbild 6 des Einschubelementes 4 können auch hier feinere Abstufungen realisiert werden. Zur Begrenzung des voreingestellten Hubes des Einschubelementes 4 kommt ein nach Art eines Puzzles ausgebildeter Anschlag 18 zum Einsatz, der mit unterschiedlichen seitlichen Profilierungen 19,20 versehen ist und aus zwei miteinander verbundenen Platten 18',18" besteht. Im freien Endbereich des Rungengrundkörpers 2 sind zum Anschlag 18 korrespondierende Gegenprofile 19',20' vorgesehen, in welche der Anschlag 18 unverlierbar eingeknüpft wird. Selbiger bildet eine untere Anschlagfläche 21 für das untere Anschlagelement 16, während laufwagenseitig eine obere Anschlagfläche 21' für das obere Anschlagelement 16' gebildet wird. Somit ist ein definierter Hub des Einschubelementes 4 relativ zum Rungengrundkörper 2 gegeben. Sofern ein dauerhafter Hub gegeben ist, kann das jeweilige Anschlagelement 16,16', beispielsweise durch Nieten, im Bereich des Lochbildes 6 des Einschubelementes 4 fest positioniert werden. Ist eine Variabilität gewünscht, kann auf eine lösbare Verbindung zurückgegriffen werden.

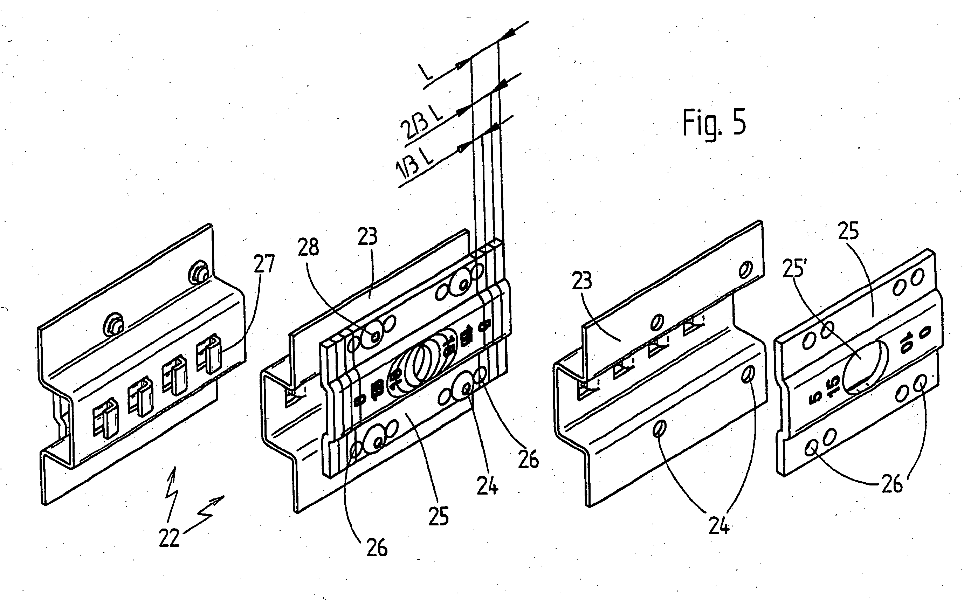

Figur 5 zeigt einen Steckkörper 22 in verschiedenen Ansichten. Der Steckkörper **22** wird gebildet aus einem etwa hutförmig ausgebildeten Steckprofil 23, das ein vorgebbares Lochbild 24 aufweist sowie ein Deckprofil 25, das ein davon abweichendes Lochbild 26 beinhaltet. Am Steckprofil 23 sind Rastelemente 27 herausgeformt. Im linken Bild der Figur 5 ist erkennbar, dass zur Einstellung feiner Höhenschritte, beispielsweise 1 /3 L, 2/3 L, das Deckprofil 25 relativ zum Lochbild 24 des Steckprofils verstellbar positioniert werden kann Wie bereits angesprochen kann bei dauerhafter Einstellung eine konkrete Position des Deckprofiles 25 relativ zum Steckprofil 23 dadurch erzeugt werden, dass die Bauteile 23,25 durch Niete 28 fest miteinander verbunden werden. Nach fertiger Montage der einzelnen Bauteile der Runge ist der Steckkörper 22 unverlierbar im Bereich des Rungengrundkörpers vorgesehen und hebt sich insoweit vom Stand der Technik ab. Das Deckprofil 25 weist eine Ausnehmung 25' auf, über welche der Steckkörper 22 manuell innerhalb des Grundkörpers 2 verstellbar ist.

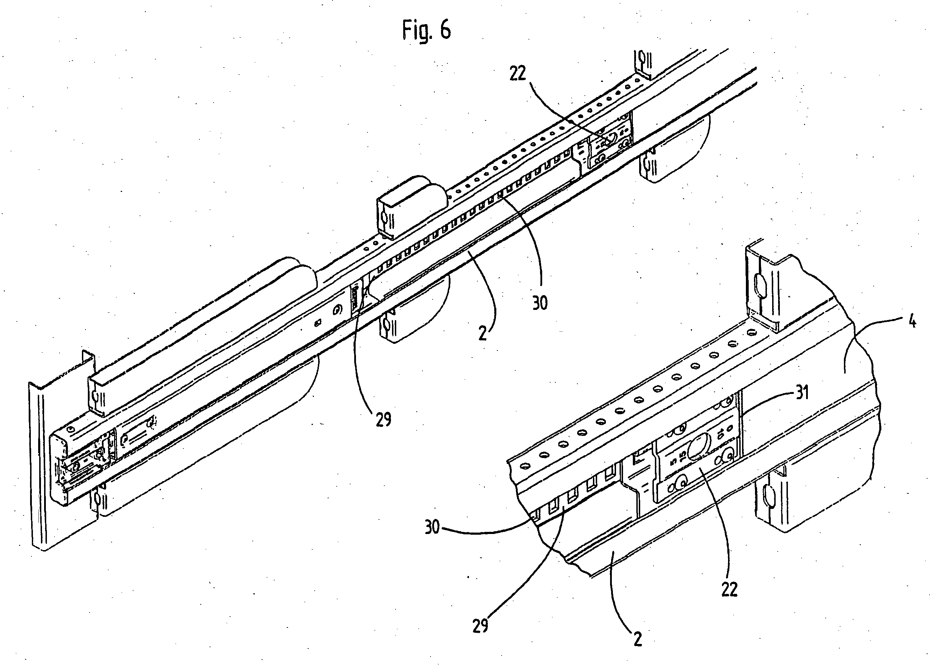

Figur 6 zeigt nun die Positionierung des Steckkörpers 22 innerhalb des Rungengrundkörpers 2. Im Bereich der unteren Stirnfläche 29 ist der Rungengrundkörper 2 mit einem von den bisher dargestellten Lochbildern abweichenden andersartigen Lochbild 30 versehen, das zur Aufnahme der Rastelemente 27 des Steckkörpers 22 dient. Der Steckkörper 22 liegt hierbei am unteren Endbereich 31 des Einschubelementes 4 an und gestattet somit das Bewegen des Nutzfahrzeuges mit erhöhtem Dachaufbau.

### Bezugszeichenliste

- 1: Rungensystem
- 2: Rungengrundkörper
- 2': seitlicher Schenkel
- 3: Planlattentaschen
- 4: teleskopierbares Einschubelement
- 5: Lochbild
- 6: Lochbild
- 7: Lochbild
- 8: Langloch
- 9: Niet
- 10: Einschubelement
- 11: Lochbild
- 12: Lochbild
- 13: Laufwagen
- 14: freie Stirnfläche
- 15: Sicherungselement
- 16: Anschlagelement
- 16': Anschlagelement
- 17: Lochbild
- 18: Anschlag
- 18': Platte
- 18": Platte
- 19: seitliche Profilierung
- 19': Gegenprofil
- 20: seitliche Profilierung
- 20': Gegenprofil
- 21: untere Anschlagfläche
- 21': obere Anschlagfläche
- 22: Steckkörper
- 23: Steckprofil
- 24: Lochbild
- 25: Deckprofil
- 25': Ausnehmung
- 26: Lochbild
- 27: Rastelement
- 28: Niet
- 29: untere Stirnfläche
- 30: Lochbild
- 31: unterer Endbereich

## Patentansprüche

1. Rungensystem für Nutzfahrzeugaufbauten, beinhaltend einen mit vorgebbarem. Querschnitt ausgebildeten länglichen Grundkörper (2), seitlich des Grundkörpers (2) positionierbare Planlattentaschen (3) sowie einen im Bereich eines Endes des Grundkörpers (2), innerhalb desselben gegebenenfalls teleskopierbar, vorgesehenen mit einem Laufwagen (13) zusammenwirkenden Einschubelement (4, 10), **dadurch gekennzeichnet, dass** der Grundkörper (2), die Planlattentaschen (3) sowie das Einschubelement (4, 10) mit definierten Lochbildern (5, 6, 7, 11, 12, 30) versehen sind, und die einzelnen Bauteile (2, 3, 4, 10) nach Art eines Baukastensystems im Bereich ihrer jeweiligen Lochbilder (5, 6, 7, 11, 12) dergestalt zueinander positionierbar sind, dass sie zur Herbeiführung unterschiedlicher Stellungen der Planlattentaschen (3) und des Einschubelements (4, 10) am Nutzfahrzeugaufbau mit vorgebbaren Höhenschritten mittel- oder unmittelbar zueinander festlegbar sind.

2. Rungensystem nach Anspruch 1, **dadurch gekennzeichnet, dass** der im Querschnitt insbesondere C-förmig ausgebildete Grundkörper (2) zur Positionierung der seitlichen Planlattentaschen (3) über eine vorgebbare Höhe mit einem einen gleichmäßigen Lochabstand aufweisenden Lochbild (5) versehen ist, und dass das Lochbild (7) der Planlattentaschen (3) davon abweichend ist, so dass die Bauteile (2,3) in abgestuften Schritten, in Abhängigkeit vom jeweiligen Anwendungsfall, höhenmäßig unmittelbar zueinander positionierbar und festlegbar sind.

3. Rungensystem nach Anspruch 1 oder 2, **dadurch gekennzeichnet, dass** eine jede Planlattentasche (3) im Bereich eines ihrer Enden mit mindestens zwei übereinander angeordneten, gleichartig ausgebildeten Lochbildern (7) sowie mindestens einem mit Abstand dazu vorgesehenen Langloch (8) versehen ist

4. Rungensystem nach einem der Ansprüche 1 bis 3, **dadurch gekennzeichnet, dass** bei Einsatz eines nicht teleskopierbaren Einschubelementes (10) selbiges mit einem abstandsmäßig gleichen seitlichen Lochbild (12) versehen ist, und dass der zugehörige freie Endbereich des Grundkörpers (2) mindestens zwei übereinander mit Abstand zueinander vorgesehene zum Lochbild (12) des Einschubelementes (10) abweichende Lochbilder (11) unterschiedlicher Lochabstände aufweist, so dass die Bauteile (2,10) in abgestuften Schritten, in Abhängigkeit vom jeweiligen Anwendungsfall, höhenmäßig unmittelbar zueinander positionierbar und festlegbar sind.

5. Rungensystem nach einem der Ansprüche 1 bis 4, **dadurch gekennzeichnet, dass** bei Einsatz eines innerhalb des Grundkörpers (2) teleskopierbaren Einschubelementes (4) die längliche Stirnfläche (14) des Einschubelementes (4) mit mindestens zwei übereinander mit Abstand zueinander angeordneten gleichartig ausgebildeten Lochbildern (6) versehen ist, im Bereich derer jeweils ein ein definiertes andersartiges Lochbild (17) beinhaltendes Anschlagelement (16,16') positionierbar und festlegbar ist, wobei das Einschubelement (4) in der gewünschten Position relative zum Grundkörper (2) positionierbar und mittels mindestens eines Anschlags (18) mittelbar zum Grundkörper (2) festlegbar ist.

6. Rungensystem nach Anspruch 5, **dadurch gekennzeichnet, dass** das jeweilige Anschlagelement (16,16') durch eine Platte gebildet ist, wobei aufgrund ihres Lochbildes (17) durch Drehen des Anschlagelementes (16,16') relativ zur Stirnfläche (14) des Einschubelementes (4) unterschiedliche Hubwege des Einschubelementes (4) relativ zum Grundkörper (2) herbeiführbar sind.

7. Rungensystem nach Anspruch 5, **dadurch gekennzeichnet, dass** der Anschlag (18) im laufwagenseitigen Endbereich des Grundkörpers (2) einbringbar ist und eine untere (21) sowie eine obere Anschlagfläche (21') für das jeweilige Anschlagelement (16,16') bildet.

8. Rungensystem nach einem der Ansprüche 1 bis 7, **dadurch gekennzeichnet, dass** der Anschlag (18) durch zwei miteinander in Wirkverbindung stehende plattenartig ausgebildete Bauteile (18',18") besteht, wobei das dem Einschubelement (4) abgewandte Bauteil (18') nach Art eines Puzzlestückes ausgebildete seitliche Profile (19,20) aufweist, die in entsprechende Aussparungen (19',20') im Grundkörper (2) einknüpfbar sind.

9. Rungensystem nach Anspruch 8, **dadurch gekennzeichnet, dass** die korrespondierenden Profile (19,20) und Aussparungen (19',20') von unterschiedlicher geometrischer Kontur sind.

10. Rungensystem nach einem der Ansprüche 1 bis 9, **dadurch gekennzeichnet, dass** die längliche im wesentlichen durchgehende Stirnfläche (29) des Grundkörpers (2) zumindest partiell mit einem andersartigem Lochbild (30) versehen ist, in welches ein aus mindestens zwei Elementen (23,25) gebildeter Steckkörper (22) dergestalt einbringbar ist, dass das Einschubelement (4) in variabler Höhe relativ zum Grundkörper (2) positionierbar und festlegbar ist.

11. Rungensystem nach Anspruch 10, **dadurch gekennzeichnet, dass** der Steckkörper (22) durch ein dem Querschnitt des Grundkörpers (2) angepasstes Steckprofil (23) sowie ein Deckprofil (25) gebildet ist, die unterschiedliche Lochbilder (24,26) beinhalten, so dass das Steckprofil (23) und das Deckprofil (25) in abgestuften Schritten zur bedarfsweisen Positionierung des Einschubelementes (4) relativ zum Grundkörper (2) im Bereich des stirnseitigen Lochbildes (30) des Grundkörpers (2) einbringbar ist

12. Rungensystem nach Anspruch 10, **dadurch gekennzeichnet, dass** das Deckprofil (25) mit mindestens einer Ausnehmung (25') zur manuellen Verstellung des Steckkörpers (22) relativ zum Grundkörper (2), respektive zum Einschubelement (4), versehen ist

13. Rungensystem nach einem der Ansprüche 1 bis 12, **dadurch gekennzeichnet, dass** die einzelnen nicht beweglichen Bauteile (2,3,10,17,23,25) nach einmal eingestellter Position durch Niete (9,28) miteinander fest verbindbar sind.

## Claims

1. A stanchion system for utility vehicle superstructures, comprising an elongate main body (2) designed with a cross-section capable of being pre-set, tarpaulin slat pockets (3) capable of being positioned at the side of the main body (2) and an insertion element (4, 10) which is provided in the region of one end of the main body (2) optionally in a manner capable of being telescoped inside the latter and which cooperates with a running carriage (13), **characterized in that** the main body (2), the tarpaulin slat pockets (3) and the insertion element (4, 10) are provided with defined hole patterns (5, 6, 7, 11, 12, 30), and the individual components (2, 3, 4, 10) are capable of being positioned with respect to one another in the region of the respective hole patterns (5, 6, 7, 11, 12) thereof in the manner of a modular system in such a way that they are capable of being fixed directly or indirectly with respect to one another in order create different settings of the tarpaulin slat pockets (3) and the insertion element (4, 10) on the utility vehicle superstructure with vertical increments capable of being pre-set.

2. A stanchion system according to Claim 1, **characterized in that**, in order to position the lateral tarpaulin slat pockets (3) over a height capable of being pre-set, the main body (2) designed in particular in a C shape in cross-section is provided with a hole pattern (5) having a uniform hole interval, and the hole pattern (7) of the tarpaulin slat pockets (3) differs therefrom so that the components (2, 3) are capable of being positioned and fixed directly with respect to each other in height in stepped increments in a manner dependent upon the respective case of application.

3. A stanchion system according to Claim 1 or 2, **characterized in that** each tarpaulin slat pocket (3) is provided in the region of one of the ends thereof with at least two hole patterns (7) arranged one above the other and designed in a similar way and at least one elongate hole (8) provided at a distance from the latter.

4. A stanchion system according to any one of Claims 1 to 3, **characterized in that** when an insertion element (10) not capable of being telescoped is used the latter is provided with a lateral hole pattern (12) with the same intervals, and the associated free end region of the main body (2) has at least two hole patterns (11) with different hole intervals which are provided one above the other at a distance from each other and which differ from the hole pattern (12) of the insertion element (10), so that the components (2, 10) are capable of being positioned and fixed directly with respect to each other in height in stepped increments in a manner dependent upon the respective case of application.

5. A stanchion system according to any one of Claims 1 to 4, **characterized in that** when an insertion element (4) capable of being telescoped inside the main body (2) is used the elongate end face (14) of the insertion element (4) is provided with at least two hole patterns (6) which are arranged one above the other at a distance from each other and are designed in a similar way and in the region of which a stop element (16, 16') containing a defined hole pattern (17) of different type is capable of being positioned and fixed in each case, wherein the insertion element (4) is capable of being positioned relative to the main body (2) in the desired position and is capable of being fixed indirectly with respect to the main body (2) by means of at least one stop (18).

6. A stanchion system according to Claim 5, **characterized in that** the respective stop element (16, 16') is formed by a plate, wherein different stroke paths of the insertion element (4) relative to the main body (2) are capable of being carried out by rotation of the stop element (16, 16') relative to the end face (14) of the insertion element (4) on the basis of the hole pattern (17) of the aforesaid plate.

7. A stanchion system according to Claim 5, **characterized in that** the stop (18) is capable of being introduced into the end region of the main body (2) towards the running carriage and forms a lower stop face (21) and an upper stop face (21') for the respective stop element (16, 16').

8. A stanchion system according to any one of Claims 1 to 7, **characterized in that** the stop (18) [is formed] by two components (18', 18") operatively connected to each other and designed in the manner of plates, wherein the component (18') facing away from the insertion element (4) has lateral profiles (19, 20) which are designed in the manner of a jigsaw puzzle and which are capable of being inserted into corresponding recesses (19', 20') in the main body (2).

9. A stanchion system according to Claim 8, **characterized in that** the corresponding profiles (19, 20) and recesses (19', 20') have different geometrical contours.

10. A stanchion system according to any one of Claims 1 to 9, **characterized in that** the substantially continuous elongate end face (29) of the main body (2) is provided at least in part with a hole pattern (30) of different type into which a plug-in body (22) formed from at least two elements (23, 25) is capable of being introduced in such a way that the insertion element (4) is capable of being positioned and fixed at a variable height relative to the main body (2).

11. A stanchion system according to Claim 10, **characterized in that** the plug-in body (22) is formed by a plug-in profile (23) adapted to the cross-section of the main body (2) and by a cover profile (25), which have different hole patterns (24, 26), so that the plug-in profile (23) and the cover profile (25) [are] capable of being inserted in the region of the hole pattern (30) at the front of the main body (2) in stepped increments for the positioning of the insertion element (4) if necessary relative to the main body (2).

12. A stanchion system according to Claim 10, **characterized in that** the cover profile (25) is provided with at least one recess (25') for the manual adjustment of the plug-in body (22) relative to the main body (2) or to the insertion element (4) respectively.

13. A stanchion system according to any one of Claims 1 to 12, **characterized in that** the individual non-movable components (2, 3, 10, 17, 23, 25) are capable of being connected to one another in a fixed manner by rivets (9, 28) once the position has been set.

## Revendications

1. Système de ridelle pour les structures carrossées des véhicules utilitaires, comportant un corps de base (2) allongé, réalisé avec une section transversale prédéfinissable, des poches pour lattes planes (3), aptes à être positionnées latéralement sur le corps de base (2), ainsi qu'un élément d'insertion (4, 10) prévu dans la zone d'une extrémité du corps de base (2), éventuellement sous forme télescopique à l'intérieur de ce dernier, et coopérant avec un chariot (13), **caractérisé en ce que** le corps de base (2), les poches pour lattes planes (3) et l'élément d'insertion (4, 10) sont munis d'ensembles de trous (5, 6, 7, 11, 12, 30) définis, et les différentes pièces (2, 3, 4, 10) peuvent être positionnées de manière modulaire dans la zone de leurs ensembles de trous (5, 6, 7, 11, 12, 30) respectifs, de telle sorte qu'elles peuvent être fixées directement ou indirectement les unes aux autres avec des niveaux de hauteur différents pour aboutir à différents positionnements des poches pour lattes planes (3) et de l'élément d'insertion (4, 10) sur la structure carrossée du véhicule utilitaire.

2. Système de ridelle selon la revendication 1, **caractérisé en ce que**, pour positionner les poches pour lattes planes (3) latérales à une hauteur prédéfinissable, le corps de base (2), réalisé avec une section transversale en particulier en forme de C, est muni d'un ensemble de trous (5) avec une distance uniforme entre les trous et **en ce que** l'ensemble de trous (7) des poches pour lattes planes (3) diffère de ce dernier de telle sorte que, en fonction de chaque cas d'application, les pièces (2, 3) peuvent être positionnées et fixées directement l'une à l'autre à des niveaux espacés en hauteur.

3. Système de ridelle selon la revendication 1 ou 2, **caractérisé en ce que** chaque poche pour lattes planes (3), dans la zone de l'une de ses extrémités, est munie d'au moins deux ensembles de trous (7) de conception identique, disposés l'un au-dessus de l'autre, et d'au moins un trou oblong (8) prévu à distance desdits ensembles de trous.

4. Système de ridelle selon l'une quelconque des revendications 1 à 3, **caractérisé en ce qu'**en cas d'utilisation d'un élément d'insertion (10) non télescopique, celui-ci est muni d'un ensemble de trous (12) latéral avec une même distance entre les trous, et **en ce que** la zone d'extrémité libre correspondante du corps de base (2) comporte au moins deux ensembles de trous (11) avec des distances différentes entre les trous, disposés à distance l'un au-dessus de l'autre et différant de l'ensemble de trous (12) de l'élément d'insertion (10), de telle sorte que, en fonction de chaque cas d'application, les pièces (2, 10) peuvent être positionnées et fixées directement l'une à l'autre à des niveaux espacés en hauteur.

5. Système de ridelle selon l'une quelconque des revendications 1 à 4, **caractérisé en ce qu'**en cas d'utilisation d'un élément d'insertion (4) télescopique à l'intérieur du corps de base (2), la face frontale (14) allongée de l'élément d'insertion (4) est munie d'au moins deux ensembles de trous (6) de conception identique, disposés à distance l'un au-dessus de l'autre, dans la zone desquels respectivement un élément butoir (16, 16') contenant un ensemble de trous (17) défini de type différent, peut être positionné et fixé, ledit élément d'insertion (4) pouvant être positionné dans la position souhaitée par rapport au corps de base (2) et pouvant être fixé indirectement au corps de base (2) au moyen d'au moins une butée (18).

6. Système de ridelle selon la revendication 5, **caractérisé en ce que** chaque élément butoir (16, 16') est formé par une plaque, l'ensemble de trous (17) réalisé dans celle-ci permettant d'aboutir à différentes trajectoires de levage de l'élément d'insertion (4) par rapport au corps de base (2) sous l'effet de la rotation de l'élément butoir (16, 16') par rapport à la face frontale (14) de l'élément d'insertion (4).

7. Système de ridelle selon la revendication 5, **caractérisé en ce que** la butée (18) peut être introduite dans la zone d'extrémité du côté chariot du corps de base (2) et forme une surface de butée inférieure (21) et une surface de butée supérieure (21') pour l'élément butoir (16, 16') correspondant.

8. Système de ridelle selon l'une quelconque des revendications 1 à 7, **caractérisé en ce que** la butée (18) est constituée par deux éléments (18', 18"), réalisés en forme de plaques et mis en liaison fonctionnelle l'un avec l'autre, l'élément (18'), détourné de l'élément d'insertion (4) comportant des profils (19, 20) latéraux, qui sont réalisés à la manière d'une pièce de puzzle et qui peuvent être encliquetés dans des évidements (19', 20') correspondants dans le corps de base (2).

9. Système de ridelle selon la revendication 8, **caractérisé en ce que** les profils (19, 20) et les évidements (19', 20') correspondants ont un contour géométrique différent.

10. Système de ridelle selon l'une quelconque des revendications 1 à 9, **caractérisé en ce que** la face frontale (29) allongée, sensiblement continue, du corps de base (2) comporte au moins en partie un ensemble de trous (30) de conception différente, dans lequel un corps enfichable (22), constitué par au moins deux éléments (23, 25), peut être enfiché de telle sorte que l'élément d'insertion (4) peut être positionné et fixé à hauteur variable par rapport au corps de base (2).

11. Système de ridelle selon la revendication 10, **caractérisé en ce que** le corps enfichable (22) est constitué par un profilé d'enfichage (23) ajusté à la section transversale du corps de base (2), et par un profilé de recouvrement (25), lesquels contiennent des ensembles de trous (24, 26) différents, de telle sorte que le profilé d'enfichage (23) et le profilé de recouvrement (25) peuvent être introduits dans la zone de l'ensemble de trous (30) frontal du corps de base (2), à des niveaux espacés pour le positionnement éventuel de l'élément d'insertion (4) par rapport au corps de base (2).

12. Système de ridelle selon la revendication 10, **caractérisé en ce que** le profilé de recouvrement (25) comporte au moins un évidement (25') pour le réglage manuel du corps enfichable (22) par rapport au corps de base (2), respectivement par rapport à l'élément d'insertion (4).

13. Système de ridelle selon l'une quelconque des revendications 1 à 12, **caractérisé en ce que** les différentes pièces (2, 3, 10, 17, 23, 25) non mobiles sont fermement reliées entre elles une fois que leur position est réglée au moyen de rivets (9, 28).
